# DEMANDE DE BREVET EUROPEEN

(11) **EP 2 290 887 A1**
(43) Date de publication de la demande: **02.03.2011**
(21) Numéro de dépôt: 10172386.4
(22) Date de dépôt: 10.08.2010
(51) Int. Cl.: H04L 12/58, G06Q 10/00, H04L 29/08

(54) **Système de notification d'absence**

(30) Priorité: 01.09.2009 FR 0955943
(71) Demandeur: Alcatel Lucent, 75007 Paris (FR)
(72) Inventeur: Priam, Frédéric, 29228, BREST (FR); Elleouet, Jerome, 29228, BREST (FR)
(74) Mandataire: Nicolle, Olivier

(57) **Abrégé**

Pour transmettre un message d'absence d'un premier utilisateur disposant d'un premier terminal de communication (TC1) à un deuxième utilisateur disposant d'un deuxième terminal de communication (TC2) à travers un réseau de télécommunications (RT), le message d'absence ayant été transmis depuis le premier terminal de communication à un serveur de messagerie (SM) qui mémorise le message d'absence en correspondance avec un identificateur (IdU) du premier utilisateur, une requête comprenant l'identificateur du premier utilisateur est transmise depuis le deuxième terminal de communication à un serveur d'application (SA), suite à une consultation d'une fiche d'informations relatives au premier utilisateur par le deuxième utilisateur dans le deuxième terminal de communication. Le serveur d'application récupère le message d'absence à partir de l'identificateur du premier utilisateur et le transmet au deuxième terminal de communication afin de rendre accessible le message d'absence au deuxième utilisateur depuis la fiche d'informations du premier utilisateur.

## Description

La présente invention concerne un système de notification d'absence.

Actuellement, il existe des solutions de communication proposant aux utilisateurs de définir des messages d'absence dans leur système de messagerie audio ou vidéo, ou en encore de courrier électronique.

Lorsqu'un premier utilisateur appelle un deuxième utilisateur qui est absent sur le système de messagerie audio ou vidéo de ce dernier, le premier utilisateur peut lire ou écouter un message d'absence du deuxième utilisateur. De même, lorsqu'un premier utilisateur envoie un courrier électronique à un deuxième utilisateur qui est absent sur le système de messagerie pour courrier électronique de ce dernier, le premier utilisateur peut recevoir en réponse un message d'absence du deuxième utilisateur.

Dans tous les cas, un tel message d'absence est transmis au premier utilisateur après que ce dernier a appelé ou envoyé un courrier électronique.

Un objectif de l'invention est de remédier aux inconvénients précédents en proposant un système de notification d'absence informant un utilisateur de l'absence d'un autre utilisateur qu'il souhaite appeler.

Pour atteindre cet objectif, un procédé pour transmettre un message d'absence d'un premier utilisateur disposant d'un premier terminal de communication à un deuxième utilisateur disposant d'un deuxième terminal de communication à travers un réseau de télécommunications, comprenant une transmission du message d'absence depuis le premier terminal de communication à un serveur de messagerie qui mémorise le message d'absence en correspondance avec un identificateur du premier utilisateur, est caractérisé en ce qu'il comprend les étapes suivantes :
suite à une consultation d'une fiche d'informations relatives au premier utilisateur par le deuxième utilisateur dans le deuxième terminal de communication, transmettre une requête depuis le deuxième terminal de communication à un serveur d'application, la requête comprenant l'identificateur du premier utilisateur,
dans le serveur d'application, récupérer le message d'absence à partir de l'identificateur du premier utilisateur,
transmettre le message d'absence depuis le serveur d'application au deuxième terminal de communication afin de rendre accessible le message d'absence au deuxième utilisateur depuis la fiche d'informations du premier utilisateur.

Avantageusement, le deuxième utilisateur est informé de l'absence du premier utilisateur avant de l'appeler ou de lui envoyer un message.

Selon une autre caractéristique de l'invention, après avoir mémorisé le message d'absence en correspondance avec un identificateur du premier utilisateur, le serveur de messagerie peut transmettre un message contenant l'identificateur du premier utilisateur et un identificateur du serveur de messagerie au serveur d'application qui mémorise les identificateurs contenus dans le message, et le serveur d'application peut interroger le serveur de messagerie pour récupérer le message d'absence à partir de l'identificateur du premier utilisateur

Selon une autre caractéristique de l'invention, après avoir mémorisé le message d'absence en correspondance avec un identificateur du premier utilisateur, le serveur de messagerie peut transmettre un message contenant l'identificateur du premier utilisateur et le message d'absence au serveur d'application qui mémorise l'identificateur du premier utilisateur en correspondance avec le message d'absence, et le serveur d'application peut identifier le message d'absence mémorisé à partir de l'identificateur du premier utilisateur afin de récupérer le message d'absence.

Selon une autre caractéristique de l'invention, le serveur de messagerie peut communiquer avec un serveur de gestion qui mémorise l'identificateur du premier utilisateur en correspondance avec un identificateur du serveur de messagerie, et afin de récupérer le message d'absence, le serveur d'application peut interroger le serveur de gestion pour récupérer l'identificateur du serveur de messagerie à partir de l'identificateur du premier utilisateur puis interroge le serveur de messagerie pour récupérer le message d'absence à partir de l'identificateur du premier utilisateur

L'invention concerne également un serveur d'application pour transmettre un message d'absence d'un premier utilisateur disposant d'un premier terminal de communication à un deuxième utilisateur disposant d'un deuxième terminal de communication à travers un réseau de télécommunications, le message d'absence ayant été transmis depuis le premier terminal de communication à un serveur de messagerie qui mémorise le message d'absence en correspondance avec un identificateur du premier utilisateur, caractérisé en ce qu'il comprend :
des moyens pour recevoir une requête comprenant l'identificateur du premier utilisateur transmise depuis le deuxième terminal de communication suite à une consultation d'une fiche d'informations relatives au premier utilisateur par le deuxième utilisateur dans le deuxième terminal de communication,
des moyens pour récupérer le message d'absence à partir de l'identificateur du premier utilisateur,
des moyens pour transmettre le message d'absence au deuxième terminal de communication afin de rendre accessible le message d'absence au deuxième utilisateur depuis la fiche d'informations du premier utilisateur

L'invention se rapporte encore à un programme d'ordinateur apte à être mis en oeuvre dans un serveur, ledit programme comprenant des instructions qui, lorsque le programme est exécuté dans ledit serveur, réalisent les étapes selon le procédé de l'invention.

La présente invention et les avantages qu'elle procure seront mieux compris au vu de la description ci-après faite en référence aux figures annexées, dans lesquelles :
- la figure 1 est un bloc-diagramme schématique d'un système de notification de message selon une réalisation de l'invention,
- la figure 2 est un algorithme d'un procédé de notification de message selon une première réalisation de l'invention,
- la figure 3 est un algorithme d'un procédé de notification de message selon une deuxième réalisation de l'invention, et
- la figure 4 est un algorithme d'un procédé de notification de message selon une troisième réalisation de l'invention.

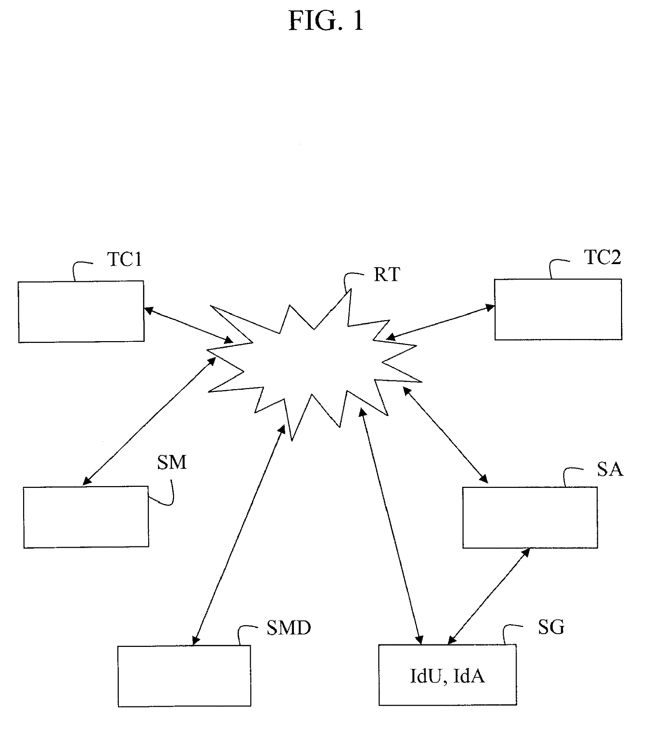

En référence à la figure 1, un système de notification de message comprend un premier terminal de communication TG1, un deuxième terminal de communication TC2, un serveur de messagerie SM, un serveur d'application SA, optionnellement un serveur de gestion SG et un serveur de média SMD, aptes à communiquer entre eux à travers un réseau de télécommunications RT.

Le réseau de télécommunications RT peut être un réseau filaire ou sans fil, ou une combinaison de réseaux filaires et de réseaux sans fil.

Selon un exemple, le réseau de télécommunications RT comprend un réseau de paquets à haut débit de type IP ("Internet Protocol" en anglais), tel que l'internet ou un intranet, ou bien un réseau privé spécifique à une société supportant un protocole propriétaire.

Le terminal de communication TC1 ou TC2 peut être un ordinateur personnel ou un terminal intelligent pouvant communiquer avec le réseau de télécommunications par une liaison filaire ou sans fil.

A titre d'exemples, un terminal de communication peut comprendre un dispositif ou objet électronique de télécommunications qui est personnel à l'utilisateur et qui peut être un assistant numérique personnel communicant PDA ("Personal Digital Assistant" en anglais), ou un téléphone intelligent (SmartPhone), pouvant être relié à une borne d'accès d'un réseau sans fil de faible portée du type WLAN ("Wireless Local Area Network" en anglais) ou conforme à l'une des normes 802.1x, ou de moyenne portée selon le protocole WIMAX ("World wide Interoperability Microwave Access" en anglais). Le terminal de communication peut être un terminal de radiocommunications cellulaire mobile apte à accéder à un réseau de radiocommunications de type GSM ("Global System for Mobile communications" en anglais) ou UMTS ("Universal Mobile Telecommunications System" en anglais).

Selon une réalisation de l'invention, le premier terminal de communication TC1 est utilisé par un premier utilisateur souhaitant produire un message qui pourra être reçu par un deuxième utilisateur qui utilise le deuxième terminal de communication TC2 et qui est susceptible d'appeler le premier utilisateur.

Le serveur de messagerie SM est apte à mémoriser un message transmis par l'utilisateur du premier terminal de communication TC1. Le serveur de messagerie SM est par exemple un système de messagerie audio ou vidéo, ou de courrier électronique. Le message est par exemple un message d'absence, tel que "Bonjour! Je suis en vacances jusqu'à la fin Juillet. A bientôt!".

Le serveur d'application SA communique avec le deuxième terminal de communication TC2. Le serveur d'application SA est par exemple un système de courrier électronique, ou encore un système de messagerie unifiée gérant des communications audio, vidéo, et de courrier électronique. Le serveur d'application SA peut être un serveur web gérant un annuaire ou apte à récupérer des informations sur des utilisateurs.

Dans un exemple particulier, le serveur d'application SA est un commutateur PABX ("Private Automatic Branch exchange" en anglais) comprenant des moyens, tels qu'un logiciel ou une combinaison de matériel informatique et de logiciel, configurés notamment pour router des communications tels que des appels ou gérer des échanges de données telles que des flux vidéo, audio ou de messages instantanés ou encore de courriers électroniques.

Le serveur de gestion SG peut gérer un annuaire d'entreprise ou de réseau social, ou gérer tout type d'outil donnant accès à des informations sur des utilisateurs. Le serveur de gestion SG peut éventuellement communiquer avec le serveur d'application SA par une liaison directe ou être confondu avec le serveur d'application SA.

Selon un exemple, l'utilisateur du premier terminal de communication TC1, qui peut être un téléphone fixe, dicte un message vocal d'absence qui est transmis au serveur de messagerie SM qui active un renvoi d'appel vers un autre téléphone de l'utilisateur ou vers une messagerie vocale, gérée par le serveur de messagerie SM. Selon un autre exemple, l'utilisateur du premier terminal de communication TC1, qui peut être un ordinateur personnel, saisit un message d'absence qui est transmis au serveur de messagerie SM qui est un serveur de messagerie pour courrier électronique.

Dans une réalisation, le serveur de messagerie SM peut transmettre un message de notification au serveur d'application SA informant ce dernier qu'un message d'absence relatif à l'utilisateur du premier terminal de communication TC1 a été créé et mémorisé dans le serveur de messagerie SM. Le message de notification contient notamment un identificateur IdU du premier utilisateur. Le serveur d'application SA mémorise un indicateur d'absence IdA en correspondance avec l'identificateur du premier utilisateur, par exemple dans une table de correspondance. Suite à la réception du message de notification, le serveur d'application SA peut récupérer auprès du serveur de messagerie SM le message d'absence précédemment mémorisé.

Dans une autre réalisation, le serveur de messagerie SM peut transmettre un identificateur IdU du premier utilisateur et le message d'absence au serveur d'application SA informant ce dernier que l'utilisateur du premier terminal de communication TC1 est absent. Le serveur d'application SA mémorise un indicateur d'absence IdA en correspondance avec l'identificateur IdU du premier utilisateur et le message d'absence, par exemple dans une table de correspondance.

Lorsque le deuxième utilisateur recherche des informations sur le premier utilisateur ou consulte le profil du premier utilisateur sur une interface du deuxième terminal de communication TC2, le deuxième terminal de communication transmet une requête au serveur d'application SA. La requête contient notamment un identificateur IdU du premier utilisateur.

Suite à la réception de la requête, le serveur d'appel SA récupère le message d'absence relatif au premier utilisateur et le transmet au deuxième terminal de communication TC2.

Par exemple, le serveur d'application SA interroge le serveur de gestion SG pour déterminer des informations sur le premier utilisateur, notamment des identificateurs de serveurs de messagerie relatif au premier utilisateur, dont un identificateur du serveur de messagerie SM, afin d'interroger les serveurs de messagerie et de récupérer un message d'absence éventuellement mémorisé par l'un de ces derniers.

Selon un autre exemple, le serveur d'application SA a reçu un message de notification depuis le serveur de messagerie SM, et interroge le serveur de messagerie afin de récupérer un message d'absence mémorisé par le serveur de messagerie SM.

Selon un autre exemple, le serveur d'application SA a déjà mémorisé le message d'absence du premier utilisateur et le retrouve au moyen de l'identificateur IdU du premier utilisateur mémorisé en correspondance avec le message d'absence, par exemple dans la table de correspondance.

Optionnellement, le message d'absence est préalablement produit par l'utilisateur et transmis automatiquement depuis le premier terminal de communication TC1 au serveur de messagerie SM en collaboration avec un outil de gestion du temps; tel qu'un agenda, ayant mémorise et organisé des dates de présence et d'absence de l'utilisateur.

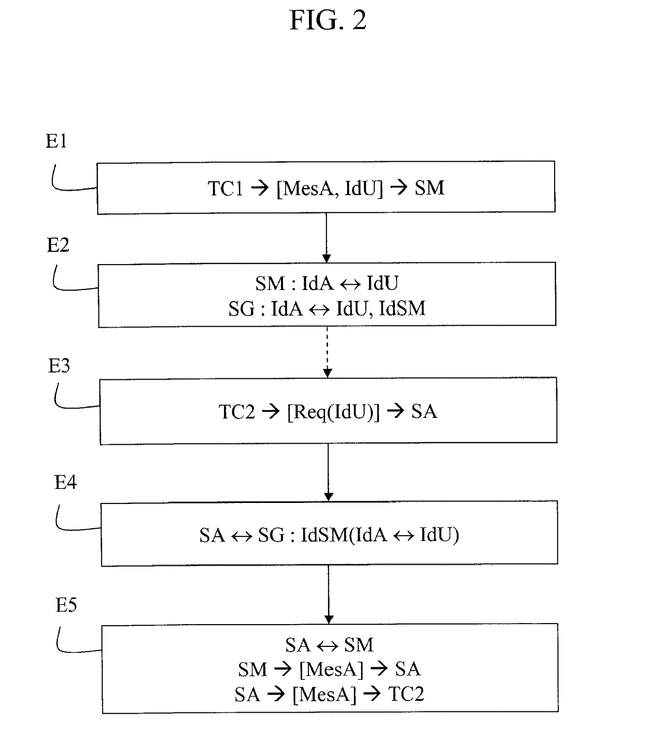

En référence à la figure 2, un procédé pour transmettre des informations d'absence d'un premier utilisateur à un deuxième utilisateur selon une première réalisation de l'invention comprend des étapes E1 à E5 exécutées dans le système de notification de message.

A l'étape E1, l'utilisateur produit un message d'absence MesA au moyen du premier terminal de communication TC1 qui transmet le message d'absence MesA et un identificateur IdU de l'utilisateur au serveur de messagerie SM. Par exemple, le premier terminal de communication TC1 transmet le message d'absence MesA au serveur de messagerie SM après avoir détecté l'absence de l'utilisateur ayant dicté ou saisi un message d'absence et activé une fonctionnalité de notification d'absence via une interface logicielle du terminal TC1.

Selon encore un autre exemple, l'utilisateur est automatiquement détecté absent en collaboration avec un outil de gestion du temps; tel qu'un agenda, ayant mémorisé et organisé des dates de présence et d'absence de l'utilisateur.

A l'étape E2, le serveur de messagerie SM mémorise un indicateur d'absence IdA en correspondance avec un identificateur IdU du premier utilisateur. Par exemple, le serveur de messagerie SM a reçu un message vocal d'absence depuis le premier terminal de communication TC1 et active un renvoi d'appel vers un autre téléphone de l'utilisateur ou vers une messagerie vocale.

Le serveur de gestion SG mémorise des informations d'absence relatives au premier utilisateur après avoir communiqué avec le serveur de messagerie, par exemple après avoir reçu un message depuis le serveur de messagerie ou après avoir interrogé ce dernier. En particulier, le serveur de gestion SG mémorise un identificateur IdU du premier utilisateur en correspondance avec un indicateur d'absence IdA et un identificateur IdSM du serveur de messagerie, qui est par exemple une adresse de ce dernier.

A l'étape E3, le deuxième utilisateur souhaite par exemple appeler le premier utilisateur et consulte des informations sur le premier utilisateur, par exemple via une fiche d'informations du premier utilisateur, tel qu'un profil du premier utilisateur.

Par exemple, le deuxième utilisateur cherche des coordonnées de contact du premier utilisateur dans un annuaire, public ou d'entreprise, via une interface web, ou dans un annuaire d'une application de messagerie électronique installée sur le deuxième terminal de communication TC2.

Dans tous les cas, le deuxième terminal de communication TC2 transmet une requête Req au serveur d'application SA, la requête comprenant notamment l'identificateur IdU du premier utilisateur.

A l'étape E4, le serveur d'application SA interroge le serveur de gestion SG pour récupérer des informations sur le premier utilisateur. En particulier, le serveur d'application transmet une requête au serveur de gestion, la requête comprenant notamment l'identificateur IdU du premier utilisateur. Le serveur d'application identifie que le premier utilisateur est absent, au moyen de l'identificateur IdU du premier utilisateur mémorisé en correspondance avec l'indicateur d'absence IdA et récupère l'identificateur IdSM du serveur de messagerie mémorisé en correspondance avec l'identificateur IdU.

A l'étape E5, le serveur d'application SA transmet une requête au serveur de messagerie SM qui est identifié à l'aide de l'identificateur IdSM et qui, en réponse, transmet le message d'absence MesA au serveur d'application, la requête comprenant notamment l'identificateur IdU du premier utilisateur. Le serveur d'application SA retransmet alors le message d'absence MesA au deuxième terminal de communication TC2.

Optionnellement, le serveur d'application SA récupère plusieurs identificateurs de serveurs de messagerie et interroge chacun des serveurs de messagerie afin de récupérer éventuellement un message d'absence. Par exemple, le serveur d'application commence à interroger un serveur de messagerie vocale puis un serveur de messagerie pour courrier électronique, même si le serveur de messagerie vocale dispose déjà d'un message d'absence.

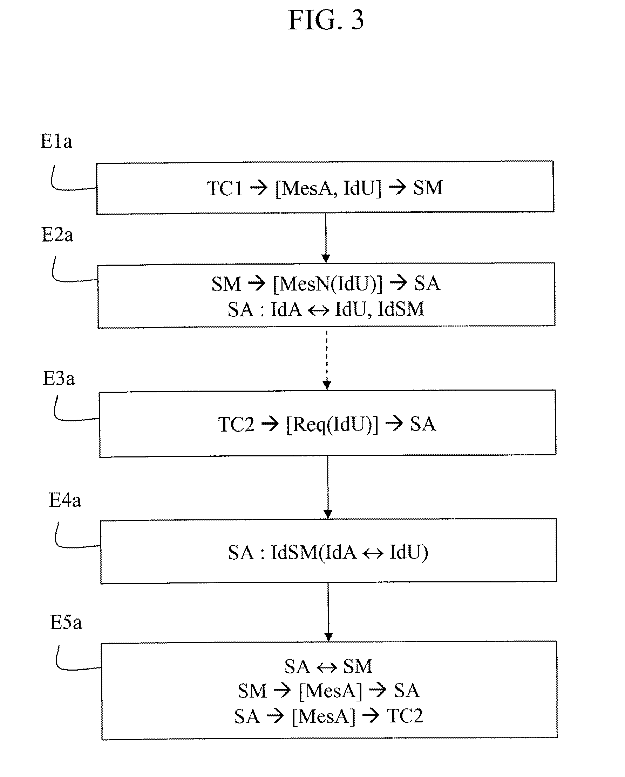

En référence à la figure 3, un procédé pour transmettre des informations d'absence d'un premier utilisateur à un deuxième utilisateur selon une deuxième réalisation de l'invention comprend des étapes E1a à E5a exécutées dans le système de notification de message.

L'étape E1a est identique à l'étape E1, en particulier, l'utilisateur produit un message d'absence MesA au moyen du premier terminal de communication TC1 qui transmet le message d'absence MesA et un identificateur IdU de l'utilisateur au serveur de messagerie SM.

A l'étape E2a, le serveur de messagerie SM transmet un message de notification MesN au serveur d'application SA. Le message de notification contient notamment un identificateur IdU du premier utilisateur et des informations indiquant qu'un message d'absence MesA relatif à l'utilisateur du premier terminal de communication TC1 a été créé et mémorisé dans le serveur de messagerie SM, le message de notification MesN comprenant un identificateur IdSM du serveur de messagerie. Le serveur d'application SA mémorise un indicateur d'absence IdA en correspondance avec l'identificateur IdU du premier utilisateur et l'identificateur IdSM du serveur de messagerie.

L'étape E3a est identique à l'étape E3, en particulier le deuxième utilisateur souhaite par exemple appeler le premier utilisateur et consulte des informations sur le premier utilisateur, et le deuxième terminal de communication TC2 transmet une requête Req au serveur d'application SA, la requête comprenant notamment l'identificateur IdU du premier utilisateur.

A l'étape E4a, le serveur d'application SA identifie qu'un indicateur d'absence IdA a été mémorisé en correspondance avec un identificateur IdU du premier utilisateur et identifie l'identificateur IdSM du serveur de messagerie mémorisé en correspondance avec l'identificateur IdU du premier utilisateur. Le serveur d'application SA récupère un l'identificateur IdSM du serveur de messagerie, qui est par exemple une adresse de ce dernier.

A l'étape E5a, le serveur d'application SA transmet une requête au serveur de messagerie SM qui, en réponse, transmet le message d'absence MesA au serveur d'application. Le serveur d'application SA retransmet alors le message d'absence MesA au deuxième terminal de communication TC2.

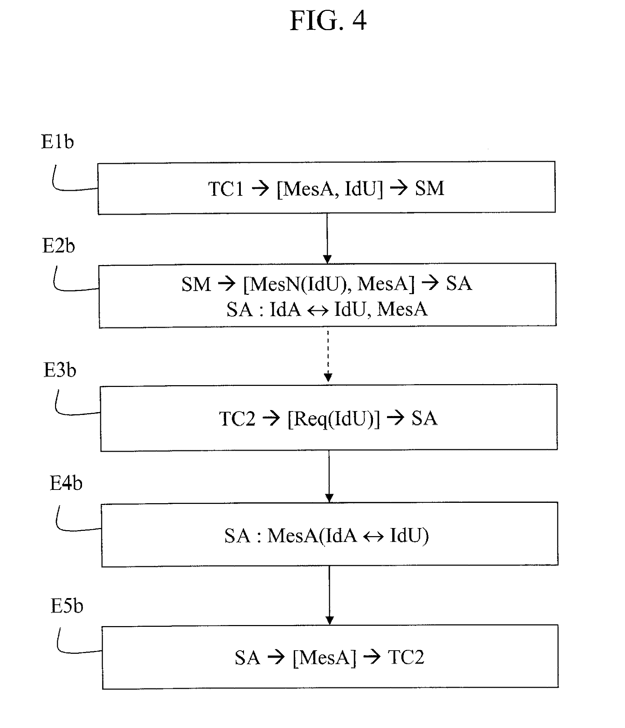

En référence à la figure 4, un procédé pour transmettre des informations d'absence d'un premier utilisateur à un deuxième utilisateur selon une troisième réalisation de l'invention comprend des étapes E1b à E5b exécutées dans le système de notification de message.

L'étape E1b est identique à l'étape E1, en particulier, l'utilisateur produit un message d'absence MesA au moyen du premier terminal de communication TC1 qui transmet le message d'absence MesA et un identificateur IdU de l'utilisateur au serveur de messagerie SM.

A l'étape E2b, le serveur de messagerie SM transmet un message de notification MesN et le message d'absence MesA au serveur d'appel SA. Le message de notification contient notamment un identificateur IdU du premier utilisateur. Le serveur d'application SA mémorise un indicateur d'absence IdA en correspondance avec l'identificateur IdU du premier utilisateur et le message d'absence MesA.

L'étape E3b est identique à l'étape E3, en particulier le deuxième utilisateur souhaite par exemple appeler le premier utilisateur et consulte des informations sur le premier utilisateur, et le deuxième terminal de communication TC2 transmet une requête Req au serveur d'application SA, la requête comprenant notamment l'identificateur IdU du premier utilisateur.

A l'étape E4b, le serveur d'application SA identifie qu'un indicateur d'absence IdA a été mémorisé en correspondance avec un identificateur IdU du premier utilisateur et identifie le message d'absence MesA mémorisé en correspondance avec l'identificateur IdU du premier utilisateur.

A l'étape E5b, le serveur d'application SA transmet le message d'absence MesA au deuxième terminal de communication TC2.

Dans les différentes réalisations de l'invention, le deuxième utilisateur prend connaissance du message d'absence avant d'avoir appelé le premier utilisateur, par l'intermédiaire du deuxième terminal de communication, par exemple au moyen d'une application ou d'une page web.

Optionnellement, à l'étape E5, E5a ou E5b, le serveur d'application SA transmet le message d'absence à un serveur de média SMD, afin que ce dernier transforme le message avant de le retransmettre au serveur d'application. Par exemple, le message d'absence, initialement sous forme textuelle ou vocale, peut être mis sous forme vocale ou textuelle respectivement, ou encore sous forme vidéo à partir des informations contenues dans le message.

Dans les différentes réalisations de l'invention, le serveur d'application SA peut optionnellement mettre à jour d'autres serveurs de messagerie, après avoir transmis le message d'absence MesA au deuxième terminal de communication TC2 à l'étape E5, E5a ou E5b, en transmettant le message d'absence MesA aux serveurs de messagerie.

L'invention décrite ici concerne un procédé et un serveur pour transmettre un message d'absence d'un premier utilisateur disposant d'un premier terminal de communication à un deuxième utilisateur disposant d'un deuxième terminal de communication. Selon une implémentation de l'invention, les étapes du procédé de l'invention sont déterminées par les instructions d'un programme d'ordinateur incorporé dans un serveur, tel que le serveur d'application SA. Le programme comporte des instructions de programme, qui lorsque ledit programme est chargé et exécuté dans le serveur, réalisent les étapes du procédé de l'invention.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou code intermédiaire entre code source et code objet tel que dans une forme partiellement compilée, ou dans n'importe quelle autre forme souhaitable pour implémenter le procédé selon l'invention.

## Revendications

1. Procédé pour transmettre un message d'absence (MesA) d'un premier utilisateur disposant d'un premier terminal de communication (TC1) à un deuxième utilisateur disposant d'un deuxième terminal de communication (TC2) à travers un réseau de télécommunications (RT), comprenant une transmission (E1) du message d'absence depuis le premier terminal de communication (TC1) à un serveur de messagerie (SM) qui mémorise le message d'absence en correspondance avec un identificateur (IdU) du premier utilisateur, **caractérisé en ce qu'**il comprend les étapes suivantes :
suite à une consultation d'une fiche d'informations relatives au premier utilisateur par le deuxième utilisateur dans le deuxième terminal de communication (TC2), transmettre (E3) une requête (Req) depuis le deuxième terminal de communication (TC2) à un serveur d'application (SA), la requête comprenant l'identificateur (IdU) du premier utilisateur,
dans le serveur d'application (SA), récupérer le message d'absence (MesA) à partir de l'identificateur (IdU) du premier utilisateur,
transmettre le message d'absence (MesA) depuis le serveur d'application (SA) au deuxième terminal de communication (TC2) afin de rendre accessible le message d'absence au deuxième utilisateur depuis la fiche d'informations du premier utilisateur.

2. Procédé conforme à la revendication 1, selon lequel, après avoir mémorisé le message d'absence en correspondance avec un identificateur (IdU) du premier utilisateur, le serveur de messagerie transmet un message contenant l'identificateur (IdU) du premier utilisateur et un identificateur (ldSM) du serveur de messagerie au serveur d'application (SA) qui mémorise les identificateurs contenus dans le message, et le serveur d'application (SA) interroge le serveur de messagerie pour récupérer le message d'absence (MesA) à partir de l'identificateur (IdU) du premier utilisateur.

3. Procédé conforme à la revendication 1, selon lequel, après avoir mémorisé le message d'absence en correspondance avec un identificateur (IdU) du premier utilisateur, le serveur de messagerie transmet un message contenant l'identificateur (IdU) du premier utilisateur et le message d'absence (MesA) au serveur d'application (SA) qui mémorise l'identificateur (IdU) du premier utilisateur en correspondance avec le message d'absence (MesA), et le serveur d'application (SA) identifie le message d'absence mémorisé à partir de l'identificateur (IdU) du premier utilisateur afin de récupérer le message d'absence (MesA).

4. Procédé conforme à la revendication 1, selon lequel le serveur de messagerie communique avec un serveur de gestion (SG) qui mémorise l'identificateur (IdU) du premier utilisateur en correspondance avec un identificateur (IdSM) du serveur de messagerie, et afin de récupérer le message d'absence (MesA), le serveur d'application (SA) interroge le serveur de gestion pour récupérer l'identificateur (IdSM) du serveur de messagerie à partir de l'identificateur (IdU) du premier utilisateur puis interroge le serveur de messagerie pour récupérer le message d'absence (MesA) à partir de l'identificateur (IdU) du premier utilisateur.

5. Procédé conforme à la revendication 4, selon lequel le serveur de messagerie communique avec le serveur de gestion (SG) sur requête de ce dernier.

6. Procédé conforme à l'une des revendications 1 à 5, selon lequel le serveur d'application (SA) met à jour au moins un autre serveur de messagerie en transmettant le message d'absence récupéré audit autre serveur de messagerie.

7. Serveur d'application (SA) pour transmettre un message d'absence (MesA) d'un premier utilisateur disposant d'un premier terminal de communication (TC1) à un deuxième utilisateur disposant d'un deuxième terminal de communication (TC2) à travers un réseau de télécommunications (RT), le message d'absence ayant été transmis depuis le premier terminal de communication (TC1) à un serveur de messagerie (SM) qui mémorise le message d'absence en correspondance avec un identificateur (IdU) du premier utilisateur, **caractérisé en ce qu'**il comprend :
des moyens pour recevoir une requête (Req) comprenant l'identificateur (IdU) du premier utilisateur transmise depuis le deuxième terminal de communication (TC2) suite à une consultation d'une fiche d'informations relatives au premier utilisateur par le deuxième utilisateur dans le deuxième terminal de communication (TC2),
des moyens pour récupérer le message d'absence (MesA) à partir de l'identificateur (IdU) du premier utilisateur,
des moyens pour transmettre le message d'absence (MesA) au deuxième terminal de communication (TC2) afin de rendre accessible le message d'absence au deuxième utilisateur depuis la fiche d'informations du premier utilisateur.

8. Programme d'ordinateur apte à être mis en oeuvre dans un serveur d'application (SA) pour transmettre un message d'absence (MesA) d'un premier utilisateur disposant d'un premier terminal de communication (TC1) à un deuxième utilisateur disposant d'un deuxième terminal de communication (TC2), à travers un réseau de télécommunications (RT), le message d'absence ayant été transmis depuis le premier terminal de communication (TC1) à un serveur de messagerie (SM) qui mémorise le message d'absence en correspondance avec un identificateur (IdU) du premier utilisateur, ledit programme étant **caractérisé en ce qu'**il comprend des instructions qui, lorsque le programme est chargé et exécuté dans ledit terminal, réalisent les étapes suivantes :
suite à une consultation d'une fiche d'informations relatives au premier utilisateur par le deuxième utilisateur dans le deuxième terminal de communication (TC2), transmettre (E3) une requête (Req) depuis le deuxième terminal de communication (TC2) à un serveur d'application (SA), la requête comprenant l'identificateur (IdU) du premier utilisateur,
dans le serveur d'application (SA), récupérer le message d'absence (MesA) à partir de l'identificateur (IdU) du premier utilisateur,
transmettre le message d'absence (MesA) depuis le serveur d'application (SA) au deuxième terminal de communication (TC2) afin de rendre accessible le message d'absence au deuxième utilisateur depuis la fiche d'informations du premier utilisateur.
